(19) Europäisches Patentamt
European Patent Office
Office européen des brevets

(11) **EP 4 478 021 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
***G01L 7/00*** *(2006.01)* ***B01L 3/00*** *(2006.01)*

(21) Application number: **23838862.3**

(22) Date of filing: **07.07.2023**

(86) International application number:
**PCT/CN2023/106336**

(87) International publication number:
**WO 2024/012370 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 CN 202210826434**

(71) Applicant: **Tsinghua University**
**Beijing 100084 (CN)**

(72) Inventors:
• **WANG, Moran**
**Beijing 100084 (CN)**
• **LU, Xukang**
**Beijing 100084 (CN)**
• **LEI, Wenhai**
**Beijing 100084 (CN)**

(74) Representative: **Murgitroyd & Company**
**165-169 Scotland Street**
**Glasgow G5 8PL (GB)**

(54) **MICROFLUIDIC PRESSURE SENSOR, PRESSURE MEASUREMENT METHOD AND DEVICE, AND STORAGE MEDIUM**

(57)    A microfluidic pressure sensor, comprising: throats (101) connected to a micro-channel, and blind end cavities (102) connected to the throats (101). Once liquid is injected into the micro-channel filled with a gas under the action of an external force, the throats (101) and the blind end cavities (102) trap the gas in the throats (101) and the blind end cavities (102) once the liquid flows through the throats (101), and closed bubbles are formed in the blind end cavities (102). Along with changes of the external force, the closed bubbles display different degrees of contraction. A microfluidic pressure measurement method, a computer-readable storage medium, and a pressure measurement device.

FIG. 1

EP 4 478 021 A1

**Description**

This application claims priority to a Chinese patent application filed to the Chinese Patent Office on July 13, 2022, with an application number 2022108264341 and an invention title "Microfluidic Pressure Sensor, Detection Method, Device, System and Storage Medium", the contents of which should be understood to be incorporated herein by reference.

Technical Field

The present application relates to, but is not limited to, microfluidic technology, in particular, microfluidic pressure sensors, pressure measurement methods, devices, and storage media.

Background

Microfluidic experiment has a wide application prospect in medicine screening, cell analysis, reaction testing and multi-phase flow mechanism research. Liquid delivery for microfluidic experiments may be accomplished using non-microfluidic apparatus such as constant -pressure-driven pressure pumps and constant-flow-driven syringe pumps. In the experiment, the pressure distribution and evolution law have a key influence on the liquid flow. For example, during medicine screening and cell analysis, the pressure of the micro-channel in the microfluidic apparatus can be precisely regulated to deliver the sample to be tested to a designated location; during multiphase displacement of porous media, local pressure fluctuations and changes of micro-channels under a condition of constant flow injection may be obtained to analyze the flow mechanism. However, in traditional pressure measurement method, the liquid to be measured can only lead out from a connecting conduit outside the microfluidic apparatus to obtain a pressure change at the inlet and outlet of the microfluidic apparatus, i.e., an average pressure of the entire device is obtained, and it is impossible to realize an in-situ real-time pressure measurement at a designated location of the micro-channel in the microfluidic apparatus.

Summary

The following is a summary of the topics described in detail in this application. This summary is not intended to limit the scope of the claims.

The present application provides a microfluidic pressure sensor, a pressure measurement method, a device, and a storage medium, which can realize in-situ real-time pressure measurement at a designated location of a micro-channel in a microfluidic apparatus.

A microfluidic pressure sensor provided by the present application includes:

a throat connected to a micro-channel;

blind end cavity connected to the throat;

wherein liquid is injected into the micro-channel filled with gas under the action of an external force, after the liquid flows through the throat, the throat and the blind end cavity block the gas in the throat and the blind end cavity to form a closed bubble in the blind end cavity; as the external force changes, the closed bubble exhibits different degrees of contraction.

As an example, a width of the throat is not more than K1 times the width of the micro-channel connected to the throat, K1 is a number greater than 0 and less than 1/2, or K1 is equal to 1/2.

As an example, when K1 is a number greater than 0 and less than 1/2, K1 is 1/5.

As an example, a length of the throat is no more than K2 times the width of the micro-channel connected to the throat, K2 is a number greater than 0 and less than 1/2, or K2 is equal to 1/2.

As an example, when K2 is a number greater than 0 and less than 1/2, K2 is 1/5.

As an example, a cross section of the blind end cavity is circular, and a diameter of the cross section is not less than M1 times the width of the throat, and M1 is an integer greater than 1.

As an example, a cross section of the blind end cavity is a regular polygon with a diameter of an inscribed circle not less than M2 times the width of the throat; M2 is an integer greater than 1.

As an example, the regular polygon is a regular triangle or a regular quadrilateral.

As an example, type of the gas includes any one or more of air, oxygen, nitrogen, helium, neon, argon.

As an example, type of the liquid includes any one or more of deionized water, salt solution, particle suspension, alkane, aromatic hydrocarbon, emulsion.

As an example, when the external force is less than a second pressure threshold, a volume of a closed bubble is made to be K3 times a volume of the blind end cavity;

when the external force is greater than a second pressure threshold and less than a first pressure threshold, the volume of the closed bubble is made to be K4 times the volume of the blind end cavity; K4 is greater than K3, K4 and K3 are both numbers greater than 0 and less than 1;

the second pressure threshold is less than the first pressure threshold, the first pressure threshold is less than or equal to 2000 mbar and the second pressure threshold is less than or equal to 100 mbar.

An embodiment of the present application further provides a method for measuring pressure based on any one of the preceding microfluidic pressure sensors, wherein the method includes:

when the liquid is transmitted in the micro-channel under the action of an external force, obtaining an image of a closed bubble in a blind end cavity in the microfluidic pressure sensor;

obtaining a current characteristic of the closed bubble according to the image of the closed bubble;

determining a static pressure on the closed bubble according to the current characteristic of the closed bubble and an obtained initial characteristic of the closed bubble;

the initial characteristic of the closed bubble refers to a characteristic of the closed bubble when no external force is applied to the closed bubble.

As an example, determining a static pressure on the closed bubble according to the current characteristic of the closed bubble and the obtained initial characteristic of the closed bubble, includes:
calculating the static pressure on the closed bubble by the following formula:

$$P_m = \left[ P_0 + 2\sigma \left( \frac{1}{d_0} + \frac{1}{H} \right) \right] \frac{S_{b0}}{S_b} - 2\sigma \left( \frac{1}{d} + \frac{1}{H} \right)$$

Herein, $P_m$ represents the static pressure on the closed bubble, $P_0$ represents the initial pressure of the closed bubble, $\sigma$ represents the interfacial tension of gas-liquid two-phase, H represents a depth of the micro-channel, d and $d_0$ represent a current curvature diameter of the closed bubble and an initial curvature diameter of the closed bubble, respectively, $S_b$ and $S_{b0}$ represent a current area of the closed bubble and an initial area of the closed bubble, respectively.
An embodiment of the present application further provides a computer-readable storage medium, wherein one or more programs are stored in the computer-readable storage medium, and the one or more programs may be executed by one or more processors to implement any one of the preceding methods.
An embodiment of the present application further provides a pressure measurement device, including a memory and a processor, wherein the memory stores a program, and when the program is read and executed by the processor, any one of the preceding methods is implemented.
After the liquid is injected into a micro-channel filled with gas under the action of an external force by the microfluidic pressure sensor described in the present application, because the closed bubble is formed inside the blind end cavity due to a super-wetting state of the liquid relative to the gas, the degree of contraction of the closed bubble is affected by the pressure on the bubble, and the greater the pressure, the greater the degree of contraction of the bubble, such principle realizes the measurement of the pressure at a designated location in the micro-channel. The microfluidic pressure sensor may also be added by etching to the micro-channel in which a pressure is to be measured when the micro-channel is etched, and the microfluidic pressure sensor does not involve changes to components such as circuit structure and strain film in the microfluidic apparatus, and it does not involve complex signal transition.
Other aspects will become apparent upon reading and understanding the drawings and detailed description.

Brief Description of Drawings

The drawings are used to provide an understanding of the technical schemes of the present application, and constitute a part of the specification, and are together with the embodiments of the present application for explaining the technical schemes of the present application, and do not constitute a limitation on the technical schemes of the present application.

FIG. 1 is a structural diagram of a microfluidic pressure sensor provided by an embodiment of the present application.

FIG. 2 is a schematic diagram of changes of closed bubbles in blind end cavities with different structures under an increase of external force provided by the embodiment of the present application.

FIG. 3 is a flowchart of a method of pressure measurement according to an embodiment of the present application.

FIG. 4 is a schematic diagram of results of the pressure measurement and errors of the pressure measurement performed by a pressure sensor having a blind end cavity with a circular structure in the range of 10-100 mbar provided by an application example of the present application.

FIG. 5 is a schematic diagram of results of the pressure measurement and errors of the pressure measurement performed by a pressure sensor having a blind end cavity with a a triangular structure in the range of 10-100 mbar provided by an application example of the present application.

FIG. 6 is a schematic diagram of results of the pressure measurement and errors of the pressure measurement performed by a pressure sensor having a blind end cavity with a circular structure in the range of 100-500 mbar provided by an application example of the present application.

FIG. 7 is a structural diagram of a pressure measurement device according to an embodiment of the present application.

FIG. 8 is a structural diagram of a pressure measurement system according to an embodiment of the present application.

Detailed Description

The present application describes a plurality of embodiments, but the description is exemplary and not restrictive, and it is obvious to those skilled in the art that more embodiments and implementations may be included within the scope of the embodiments described in the present application. Although many possible combinations of features are shown in the drawings and discussed in the detailed implementations, many other combinations of the disclosed features are also possible. Unless specifically limited, any feature or element of any embodiment may be used in combination with any other feature or element of any other embodiment, or may be substituted for any other feature or element of any other embodiment.

The present application includes and contemplates combinations with features and elements known to those skilled in the art. The embodiments, features, and elements already disclosed in the present application may also be combined with any conventional features or elements to form the unique inventive schemes defined by the claims. Any feature or element of any embodiment may also be combined with features or elements from other inventive schemes to form another unique inventive scheme as defined by the claims. Accordingly, it should be understood that any of the features shown and/or discussed in the present application may be implemented individually or in any suitable combination. Accordingly, except for the limitations imposed by the appended claims and their equivalents, the embodiments are not subject to other restrictions. Furthermore, various modifications and changes can be made within the scope of the appended claims.

Furthermore, when describing representative embodiments, the specification may have presented methods and/or processes as specific sequences of steps. However, to the extent that the method or process does not depend on a particular sequence of steps described herein, the method or process should not be limited to the particular sequence of steps described. As will be understood by those skilled in the art, other sequence of steps is also possible. Accordingly, the particular sequence of steps set forth in the specification should not be construed as limitations on the claims. Furthermore, claims directed to the method and/or process should not be limited to performing their steps in the sequence in which they are written, and those skilled in the art can easily understand that these sequences may vary and still remain within the spirit and scope of the embodiments of the present application.

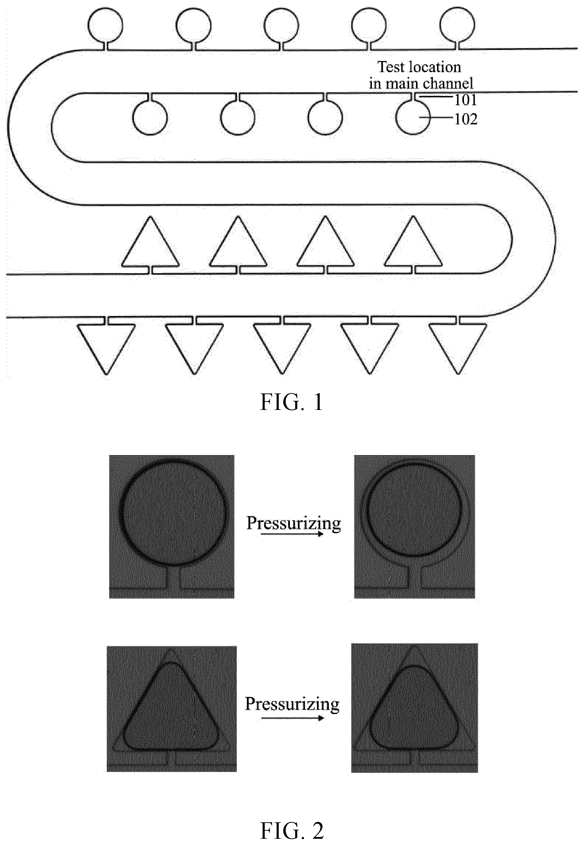

An embodiment of the present application provides a microfluidic pressure sensor. As shown in FIG. 1, the microfluidic pressure sensor includes:

a throat 101 connected to a micro-channel;

a blind end cavity 102 connected to the throat 101;

wherein liquid is injected into the micro-channel filled with gas under the action of an external force, and after the liquid flows through the throat 101, the throat 101 and the blind end cavity 102 block the gas in the throat 101 and the blind end cavity 102 to form a closed bubble in the blind end cavity 102; as the external force changes, the closed bubble exhibits different degrees of contraction.

The change in the contraction of the closed bubble may be reflected in a change in the volume and curvature of the closed bubble.

When the liquid is injected into the micro-channel filled with gas under the action of external force, a closed bubble is formed inside the blind end cavity by using the super-wetting state of the liquid relative to the gas, and the contraction degree of the closed bubble is affected by the pressure on the bubble at this time, and the greater the pressure is, the greater the contraction degree of the bubble is. The pressure sensor described in the embodiment of the present application realizes the measurement of the pressure at a designated location (the connection between the micro-channel and the pressure sensor) in the micro-channel by using such principle. FIG. 2 shows the change of the closed bubbles in the blind end cavities of different structures with the increase of external force. The closed bubble is completely located inside the blind end cavity and does not contact with the inner wall of the blind end cavity. With the increase of pressure, the closed bubble contracts to the center.

The microfluidic pressure sensor described in the embodiment of the present application may also be added by etching to the micro-channel in which a pressure is to be measured when the micro-channel is etched, and the microfluidic pressure sensor does not involve changes to components such as circuit structure and strain thin film in the microfluidic apparatus, and it does not involve complex signal transition, which has low cost and is simple to implement. In addition, the microfluidic pressure sensor provided by this application further has the advantages of small size, not being easily affected by the wettability of solid walls (it does not involve the problem of contact angle hysteresis), and real-time pressure response.

In an exemplary embodiment, a width of the throat is not more than K1 times the width of the micro-channel connected to the throat, K1 is a number greater than 0 and less than 1/2, or K1 is equal to 1/2. Exemplarily, when K1 is a number greater than 0 and less than 1/2, K1 may be 1/5.

The dimensional relationship between the width of the throat and the width of the micro-channel described in the embodiments of the present application is advantageous for that the gas stored inside the throat and the blind end cavity is blocked to form a closed bubble after the liquid is injected into the micro-channel filled with gas, also avoiding part of the gas being retained in the throat.

In an exemplary embodiment, a length of the throat is no more than K2 times the width of the micro-channel connected to the throat, K2 is a number greater than 0 and less than 1/2, or K2 is equal to 1/2. For example, when K2 is a number greater than 0 and less than 1/2, K2 may be 1/5, which can ensure the in-situ real-time response of the pressure and avoid part of the gas being retained in the throat.

In an exemplary embodiment, an opening direction of the connection between the throat and the micro-channel may be perpendicular to the flow direction of the liquid in the micro-channel (the opening direction of the connection between the throat and the micro-channel in FIG. 1 is perpendicular to the flow direction of the liquid in the micro-channel), or parallel to the flow direction of the liquid in the micro-channel. When the opening direction is perpendicular to the flow direction of the liquid in the micro-channel, the measured pressure is a static pressure. When the opening direction is parallel to the flow direction of the liquid in the micro-channel, the total pressure $P_{sum}$ can be measured, a liquid flow rate can be obtained by combining with the static pressure measurement and based on the Bernoulli principle

$$P_{sum} = P_m + \frac{1}{2}\rho V^2$$

, wherein $P_m$ represents the static pressure, V represents the liquid flow rate, $\rho$ represents liquid density.

In an exemplary embodiment, a cross-section of the blind end cavity (i.e., a cross-section taken along the depth direction) may be circular or polygonal.

When the cross section of the blind end cavity is circular, the diameter of the circle is not less than M1 times the width of the throat, for example, M1 is equal to 4;

When the cross section of the blind end cavity is a polygon, the diameter of the inscribed circle of the polygon is not less than M2 times the width of the throat, for example, M2 is equal to 4.

M1 and M2 are both integers greater than 1.

The dimensional relationship of the blind end cavity described in the embodiments of the present application is advantageous for that the gas stored inside the throat and the blind end cavity is blocked to form a closed bubble after the liquid is injected into the micro-channel filled with gas. When the pressure increases, the closed bubble contracts and volume of the closed bubble becomes smaller. For the circular blind end cavity, the curvature of the inner closed bubble increases, and for the polygonal blind end cavity, the curvature of the inner closed bubble decreases. When the pressure decreases, the closed bubble expands and the volume becomes larger. For the circular blind end cavity, the curvature of the inner closed bubble decreases, and for the polygonal blind end cavity, the curvature of the inner closed bubble increases.

In an exemplary embodiment, a cross section of the blind end cavity is a regular polygon, which is considered that a curvature of the bubble at different corner points under the irregular shape is inconsistent, which affects the calculation of the contraction degree of the closed bubble, and thus may affect the accuracy of the pressure measurement. In addition, for the blind end cavity with the regular polygon structure, because the arc at the vertex of the regular polygon will contract to the center due to a high pressure and form a non-spherical shape constrained by the wall, which is not convenient to fit the curvature, so it is recommended for the case in which the pressure to be measured is below 100 mbar.

In an exemplary embodiment, the cross section of the blind end cavity is a regular triangle or a regular quadrilateral, which is considered that the random error generally introduced by the three corner points of the triangle or the four corner points of the quadrilateral is small, thereby ensuring that the accuracy of the obtained pressure measurement is high.

In an exemplary embodiment, the type of the gas includes any one or more of air, oxygen, nitrogen, helium, neon, and argon. Wherein choosing inert gases such as nitrogen, helium, neon and argon can reduce the influence of gas dissolution on the measurement.

In an exemplary embodiment, the type of liquid includes any one or more of deionized water, salt solution, particle suspension, alkane, aromatic hydrocarbon, emulsion.

In an exemplary embodiment, the external force is less than or equal to a first pressure threshold, and the first pressure threshold is less than or equal to 2000 mbar, so as to avoid a large random error caused by complete dissolution or too small volume of the closed bubble.

The size of the bubble may be controlled by the external force, in an exemplary embodiment, when the external force is less than a second pressure threshold, the volume of the closed bubble is made to be K3 times the volume of the blind end cavity;

when the external force is greater than a second pressure threshold and less than a first pressure threshold, the volume of the closed bubble is made to be K4 times the volume of the blind end cavity; K4 is greater than K3, and both K4 and K3 are numbers greater than 0 and less than 1;

the second pressure threshold is less than the first pressure threshold, and the second pressure threshold is less than or equal to 100 mbar.

The embodiment of the present application uses smaller closed bubble at low pressure, which is considered that the change of bubble caused by low pressure is smaller than that caused by high pressure, and the relative change of contraction of small bubble is more obvious and beneficial to pressure measurement; while larger closed bubble are used at high pressure because the effect of bubble dissolution at high pressure is greater.

In an exemplary embodiment, the value of K3 ranges from 40% to 70%; and the value of K4 ranges from 70%-90%.

Through experimental research, the inventors of the present application found that the volume of the closed bubble should not be too small (for example, less than 40% of the volume of the blind end cavity), the error after imaging is relatively great if the volume is too small, the calculation of bubble contraction is affected and the accuracy of pressure measurement is affected; and the volume of the closed bubble should not be too large (such as greater than 90% of the volume of the blind end cavity) either, if the bubble is too large, the bubble will approach the wall of the blind end cavity and may be affected by the surface conditions of the wall (such as wall etching roughness), such that the pressure measurement accuracy is affected.

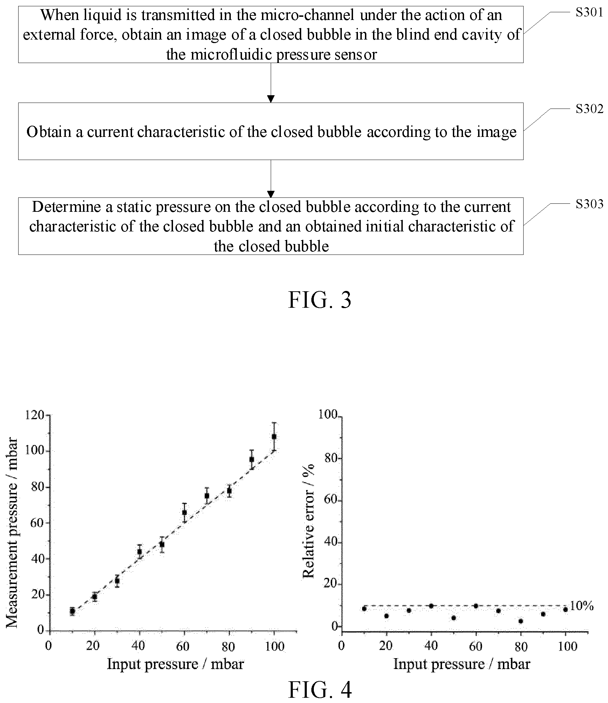

An embodiment of the present application also provides a method of measuring pressure based on the microfluidic pressure sensor described in the previous embodiment, as shown in FIG. 3, the method includes steps S301-S303.

In step S301, when the liquid is transmitted in the micro-channel under the action of an external force, an image of a closed bubble in the blind end cavity of the microfluidic pressure sensor is obtained.

The image of the closed bubble may be acquired by an image acquisition apparatus, such as a camera or the like.

In step S302, a current characteristic of the closed bubble is obtained according to the image.

Characteristics of a closed bubble may include: a diameter of curvature of the bubble, an area of the bubble.

In step S303, a static pressure on the closed bubble is determined according to the current characteristic of the closed bubble and an obtained initial characteristic of the closed bubble.

The initial characteristic of the closed bubble refers to the characteristic of the closed bubble when no external force is applied to the closed bubble.

In the embodiment of the present application, the microfluidic pressure sensor described in the previous embodiments is used to obtain the static pressure on the closed bubble, and the static pressure on the closed bubble is the pressure subjected at a designated location (a connection between the micro-channel and the pressure sensor) in the micro-channel.

In an exemplary embodiment, determining a static pressure on the closed bubble according to the current characteristic of the closed bubble and the obtained initial characteristic of the closed bubble, includes:

$$P_m = \left[ P_0 + 2\sigma \left( \frac{1}{d_0} + \frac{1}{H} \right) \right] \frac{S_{b0}}{S_b} - 2\sigma \left( \frac{1}{d} + \frac{1}{H} \right) \qquad (1)$$

wherein $P_m$ represents the static pressure on the closed bubble, $P_0$ represents the initial pressure of the closed bubble (which refers to the pressure on the closed bubble when no external force is applied to the closed bubble, generally it is atmospheric pressure), $\sigma$ represents the interfacial tension of gas-liquid two-phase, H represents a depth of the micro-channel, d and $d_0$ represent a current curvature diameter of the closed bubble and an initial curvature diameter of the closed bubble, respectively, $S_b$ and $S_{b0}$ represent a current area of the closed bubble and an initial area of the closed bubble, respectively.

when the blind end cavity is circular, the curvature diameterd of the bubble may be inversely calculated from the bubble area S: $d = 2\sqrt{\frac{S}{\pi}}$ ;

when the blind end cavity is a regular polygon, the curvature diameter of the bubbled may be obtained by fitting the curvatures at all corner points of the bubble and averaging the fitted curvatures.

Since the curvature change of the closed bubble with regular polygon structure is reflected in local interface contraction and curvature increase at corner points, it can be obtained from formula (1) that the curvature change in regular polygon structure is more conducive to amplifying a pressure change signal.

In an exemplary embodiment, the initial characteristic of the closed bubble is obtained by including: when liquid is injected into the micro-channel filled with gas under the action of an external force and thus a closed bubble is formed in the blind end cavity, the action of the external force is removed, and the closed bubble slowly changes to a stable state, and the closed bubble in the stable state has a characteristic which is the initial characteristic of the closed bubble.

Hereinafter, the pressure measurement method described in the embodiment of the present application will be described as an application example.

This application example uses microfluidic pressure sensors having blind end cavities with a circular structure and a regular triangular structure. As shown in Figure 1, the width of the micro-channel is 500 $\mu$m, the throat is perpendicular to the flow direction, the width of the throat is 50 $\mu$m, the length of the throat is 70 $\mu$m, the diameter of the circular cavity is 400 $\mu$m, the side length of the regular triangular cavity is 690 $\mu$m, and the depth of the micro-channel is 20 $\mu$m.

Step 1, introducing nitrogen into the micro-channel for about 45 minutes to exhaust the air.

Step 2, connecting a pressure pump with a liquid storage tank containing n-decane; an inlet end of the micro-channel is connected with the liquid storage tank, an outlet end is connected with a valve, a side of the valve is connected with the atmosphere, and the other side of the valve is connected with the liquid storage tank.

Step 3, applying constant pressure by a pressure pump to inject n-decane from the inlet end of the micro-channel, opening the side of the valve connected to the atmosphere, and closing the side of the valve connected to the liquid storage tank, exhausting the nitrogen in the micro-channel and forming a pressure sensitive closed bubble in the blind end cavity.

Step 4, closing the side of the valve connected to the atmosphere, opening the side of the valve connected to the liquid storage tank, closing the pressure pump to slowly release the pressure in the micro-channel, and recording the initial characteristic of the closed bubble after the closed bubble contracts to a stable state due to the pressure change.

Step 5, restarting the pressure pump to form a closed system in which the inlet and outlet are bidirectionally pressurized in the micro-channel to ensure that there is no pressure drop inside the micro-channel, and the output pressure of the pressure pump is the pressure inside the micro-channel.

Step 6, adjusting the output pressure of the pressure pump at an interval of 10 mbar within a range of 10-100 mbar, recording an image of the closed bubble within 1 min, and obtaining a current characteristic of the closed bubble according to the image of the closed bubble.

Step 7, calculating the static pressure of the closed bubble according to the current characteristics of the closed bubble, the initial characteristics of the closed bubble and the formula (1); and calculating a pressure measurement error according to the calculated static pressure on the closed bubble and the output pressure of the pressure pump.

FIG. 4 shows the results of pressure measurements in the range of 10-100 mbar by a pressure sensor having a blind end cavity with a circular structure, and the pressure measurement error in the range of 10-100 mbar. From FIG. 4, it can be seen that when the output pressure of the pressure pump is in the range of 10-100 mbar, the error of the pressure measurement performed by the pressure sensor described in the embodiment of the present application is less than 10%.

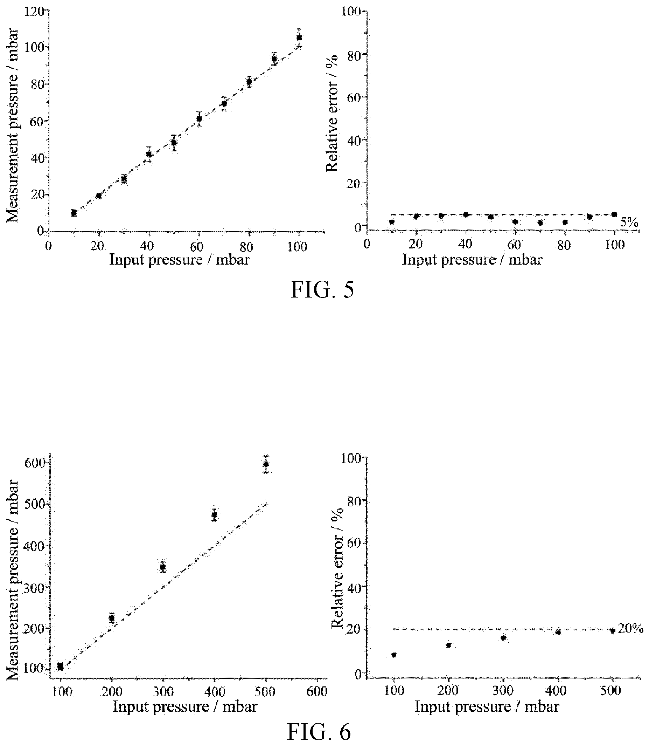

FIG. 5 shows the results of pressure measurements in the range of 10-100 mbar by a pressure sensor having a blind end cavity with a regular triangular structure, and the pressure measurement error in the range of 10-100 mbar. From FIG. 5, it can be seen that when the output pressure of the pressure pump is in the range of 10-100 mbar, the error of the pressure measurement performed by the pressure sensor described in the embodiment of the present application is less than 5%, and the accuracy and stability are better than those of the circular structure.

Step 8, continuing to adjust the output pressure of the pressure pump at an interval of 50 mbar within a range of 100-500 mbar, recording an image of the closed bubble within 1 min, and obtaining a current characteristic of the closed bubble according to the image of the closed bubble.

Step 9, calculating the static pressure on the closed bubble according to the current characteristics of the closed bubble, the initial characteristics of the closed bubble and the formula (1); and calculating a pressure measurement error according to the calculated static pressure on the closed bubble and the output pressure of the pressure pump.

FIG. 6 shows the results of pressure measurements in the range of 100-500 mbar by a pressure sensor having a blind end cavity with a circular structure, and the pressure measurement error in the range of 100-500 mbar. From FIG. 6, it can be seen that when the output pressure of the pressure pump is in the range of 100-500 mbar, the error of the pressure measurement performed by the pressure sensor described in the embodiment of the present application is less than 20%, and the pressure measurement accuracy is slightly reduced.

An embodiment of the present application further provides a computer-readable storage medium, wherein one or more programs are stored in the computer-readable storage medium, and the one or more programs may be executed by one or more processors to implement any one of pressure measurement methods as described in the preceding embodiments.

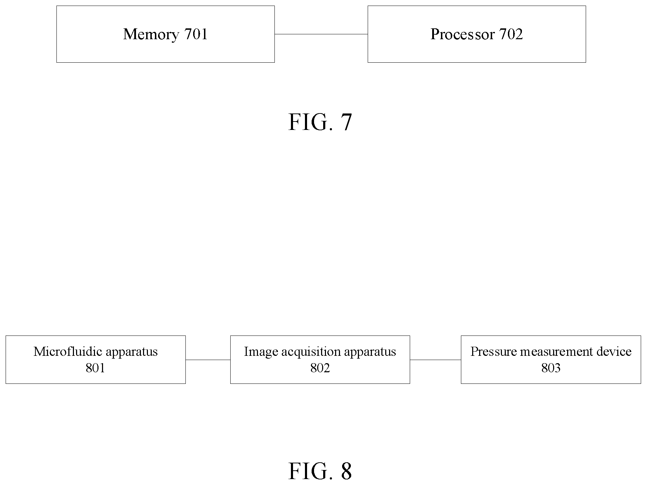

An embodiment of the present application further provides a pressure measurement device, as shown in FIG. 7, the pressure measurement device includes a memory 701 and a processor 702, and the memory 701 stores a program, when the program is read and executed by the processor 702, any one of the pressure measurement methods as described in the preceding embodiments is implemented.

An embodiment of the present application further provides a microfluidic apparatus, wherein the microfluidic apparatus includes:

a micro-channel;

and any one of microfluidic pressure sensors as described in the preceding embodiments connected to the micro-channel.

An embodiment of the present application further provides a pressure measurement system, as shown in FIG. 8, the pressure measurement system includes:

a microfluidic apparatus 801, wherein the microfluidic apparatus 801 includes: a micro-channel; and any one of microfluidic pressure sensors described in the preceding embodiments connected to the micro-channel;

an image acquisition apparatus 802, configured to acquire an image of a closed bubble in the microfluidic pressure sensor;

a pressure measurement device 803 as described in the preceding embodiments is configured to perform pressure measurement according to the closed bubble image acquired by the image acquisition apparatus.

Those skilled in the art will appreciate that all or some of the steps in the methods, systems, functional modules/units in the apparatus disclosed above may be implemented as software, firmware, hardware, and suitable combinations thereof. In a hardware embodiment, the division between functional modules/units mentioned in the above description does not necessarily correspond to the division of physical components; For example, one physical component may have multiple functions, or one function or step may be performed by multiple physical components in cooperation. Some or all of the components may be implemented as software executed by a processor, such as a digital signal processor or a microprocessor, or as hardware, or as an integrated circuit, such as an application specific integrated circuit. Such software may be distributed on a computer-readable medium, the computer-readable medium may include a computer storage medium (or non-transitory medium) and a communication medium (or transitory medium). As is well known to those skilled in the art, the term computer storage medium includes volatile and non-volatile, removable and non-removable media implemented in any method or technique for storing information, such as computer-readable instructions, data structures, program modules, or other data. Computer storage media include, but are not limited to, RAM, ROM, EEPROM, flash memory or other memory technology, CD-ROM, digital versatile disk (DVD) or other optical disk storage, magnetic cartridges, magnetic tape, magnetic disk storage or other magnetic storage devices, or any other medium that can be used to store desired information and can be accessed by a computer. Furthermore, it is well known to those skilled in the art that communication media typically contain computer-readable instructions, data structures, program modules, or other data in modulated data signals in such as carrier waves or other transmission mechanisms, and may include any information delivery medium.

**Claims**

1. A microfluidic pressure sensor, the microfluidic pressure sensor comprising:

   a throat connected to a micro-channel;
   a blind end cavity connected to the throat;
   wherein liquid is injected into the micro-channel filled with gas under an action of an external force, after the liquid flows through the throat, the throat and the blind end cavity block gas in the throat and the blind end cavity to form a closed bubble in the blind end cavity; as the external force changes, the closed bubble exhibits different degrees of contraction.

2. The microfluidic pressure sensor of claim 1, wherein
   a width of the throat is not more than K1 times a width of the micro-channel connected to the throat, K1 is a number greater than 0 and less than 1/2, or K1 is equal to 1/2.

3. The microfluidic pressure sensor of claim 2, wherein
   when K1 is a number greater than 0 and less than 1/2, K1 is 1/5.

4. The microfluidic pressure sensor of claim 1, wherein
   a length of the throat is no more than K2 times a width of the micro-channel connected to the throat, K2 is a number greater than 0 and less than 1/2, or K2 is equal to 1/2.

5. The microfluidic pressure sensor of claim 4, wherein
   when K2 is a number greater than 0 and less than 1/2, K2 is 1/5.

6. The microfluidic pressure sensor of claim 1, wherein
   a cross section of the blind end cavity is circular, and a diameter of the cross section is not less than M1 times a width of the throat, and M1 is an integer greater than 1.

7. The microfluidic pressure sensor of claim 1, wherein
   a cross section of the blind end cavity is a regular polygon with a diameter of an inscribed circle not less than M2 times a width of the throat; and M2 is an integer greater than 1.

8. The microfluidic pressure sensor of claim 7, wherein
   the regular polygon is a regular triangle or a regular quadrilateral.

9. The microfluidic pressure sensor of claim 1, wherein
   a type of the gas comprises any one or more of air, oxygen, nitrogen, helium, neon, argon.

10. The microfluidic pressure sensor of claim 1, wherein
    a type of liquid comprises any one or more of deionized water, salt solution, particle suspension, alkane, aromatic hydrocarbon, emulsion.

11. The microfluidic pressure sensor of claim 1, wherein

    when the external force is less than a second pressure threshold, a volume of the closed bubble is made to be K3 times a volume of the blind end cavity;
    when the external force is greater than the second pressure threshold and less than a first pressure threshold, the volume of the closed bubble is made to be K4 times the volume of the blind end cavity; K4 is greater than K3, and K4 and K3 are both numbers greater than 0 and less than 1;
    the second pressure threshold is less than the first pressure threshold, the first pressure threshold is less than or equal to 2000 mbar, and the second pressure threshold is less than or equal to 100 mbar.

12. A method of measuring pressure based on the microfluidic pressure sensor of any one of claims 1 to 11, the method comprising:

when the liquid is transmitted in the micro-channel under the action of the external force, obtaining an image of the closed bubble in the blind end cavity in the microfluidic pressure sensor;
obtaining a current characteristic of the closed bubble according to the image of the closed bubble;
determining a static pressure on the closed bubble according to the current characteristic of the closed bubble and an obtained initial characteristic of the closed bubble;
and the initial characteristic of the closed bubble refers to a characteristic of the closed bubble when no external force is applied to the closed bubble.

13. The method of claim 12, wherein
determining a static pressure on the closed bubble according to the current characteristic of the closed bubble and the obtained initial characteristic of the closed bubble comprises:

calculating the static pressure on the closed bubble by a following formula:

$$P_m = \left[ P_0 + 2\sigma \left( \frac{1}{d_0} + \frac{1}{H} \right) \right] \frac{S_{b0}}{S_b} - 2\sigma \left( \frac{1}{d} + \frac{1}{H} \right)$$

wherein, $P_m$ represents the static pressure on the closed bubble, $P_0$ represents the initial pressure of the closed bubble, $\sigma$ represents an interfacial tension of gas-liquid two-phase, H represents a depth of the micro-channel, d and $d_0$ represent a current curvature diameter of the closed bubble and an initial curvature diameter of the closed bubble, respectively, $S_b$ and $S_{b0}$ represent a current area of the closed bubble and an initial area of the closed bubble, respectively.

14. A computer-readable storage medium, the computer-readable storage medium storing one or more programs, wherein the one or more programs are executable by one or more processors to implement the method of any one of claims 12 and 13.

15. A pressure measurement device, the pressure measurement device comprising a memory and a processor, wherein the memory stores a program, and when the program is read and executed by the processor, the method of any one of claims 12 and 13 is implemented.

Test location
in main channel
101
102

FIG. 1

Pressurizing

Pressurizing

FIG. 2

When liquid is transmitted in the micro-channel under the action of an external force, obtain an image of a closed bubble in the blind end cavity of the microfluidic pressure sensor — S301

Obtain a current characteristic of the closed bubble according to the image — S302

Determine a static pressure on the closed bubble according to the current characteristic of the closed bubble and an obtained initial characteristic of the closed bubble — S303

FIG. 3

FIG. 4

FIG. 5

FIG. 6

| Memory 701 | | Processor 702 |

FIG. 7

| Microfluidic apparatus 801 | | Image acquisition apparatus 802 | | Pressure measurement device 803 |

FIG. 8

## INTERNATIONAL SEARCH REPORT

| International application No. |
|---|
| **PCT/CN2023/106336** |

**A. CLASSIFICATION OF SUBJECT MATTER**

G01L 7/00(2006.01)i; B01L 3/00(2006.01)i

According to International Patent Classification (IPC) or to both national classification and IPC

**B. FIELDS SEARCHED**

Minimum documentation searched (classification system followed by classification symbols)

IPC: G01L ; B01L

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC: 气泡, 微流控, 压力, bubble, microfluidics, press

**C. DOCUMENTS CONSIDERED TO BE RELEVANT**

| Category* | Citation of document, with indication, where appropriate, of the relevant passages | Relevant to claim No. |
|---|---|---|
| PX | CN 115165196 A (TSINGHUA UNIVERSITY) 11 October 2022 (2022-10-11)<br>claims 1-15 | 1-15 |
| X | WO 2010086328 A1 (INST MIKROTECHNIK MAINZ GMBH et al.) 05 August 2010 (2010-08-05)<br>description, page 16, line 5 to page 21, line 20, and figures 1-8 | 1, 9, 12, 13-15 |
| Y | WO 2010086328 A1 (INST MIKROTECHNIK MAINZ GMBH et al.) 05 August 2010 (2010-08-05)<br>description, page 16, line 5 to page 21, line 20, and figures 1-8 | 2-8, 10, 11 |
| Y | CN 111151315 A (XI'AN SHIYOU UNIVERSITY) 15 May 2020 (2020-05-15)<br>description, paragraphs 0032-0038, and figures 1-2 | 2-8, 10, 11 |
| A | CN 105424261 A (SHANGHAI JIAO TONG UNIVERSITY) 23 March 2016 (2016-03-23)<br>entire document | 1-15 |
| A | CN 110302851 A (SHANDONG UNIVERSITY OF SCIENCE AND TECHNOLOGY) 08 October 2019 (2019-10-08)<br>entire document | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 October 2023** | **06 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/106336** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111151316 A (XI'AN SHIYOU UNIVERSITY) 15 May 2020 (2020-05-15) <br> entire document | 1-15 |
| A | CN 113945317 A (QINGDAO UNIVERSITY OF SCIENCE AND TECHNOLOGY) 18 January 2022 (2022-01-18) <br> entire document | 1-15 |
| A | WO 2017030455 A1 (CURIOSITY DIAGNOSTICS SP. Z O.O.) 23 February 2017 (2017-02-23) <br> entire document | 1-15 |

**INTERNATIONAL SEARCH REPORT**
Information on patent family members

International application No.

**PCT/CN2023/106336**

| Patent document cited in search report | | | Publication date (day/month/year) | Patent family member(s) | | | Publication date (day/month/year) |
|---|---|---|---|---|---|---|---|
| CN | 115165196 | A | 11 October 2022 | None | | | |
| WO | 2010086328 | A1 | 05 August 2010 | DE | 102009000529 | A1 | 19 August 2010 |
| CN | 111151315 | A | 15 May 2020 | None | | | |
| CN | 105424261 | A | 23 March 2016 | None | | | |
| CN | 110302851 | A | 08 October 2019 | WO | 2020215523 | A1 | 29 October 2020 |
| CN | 111151316 | A | 15 May 2020 | None | | | |
| CN | 113945317 | A | 18 January 2022 | None | | | |
| WO | 2017030455 | A1 | 23 February 2017 | PL | 413589 | A1 | 27 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022108264341